# DEMANDE DE BREVET EUROPEEN

(11) **EP 0 582 922 A1**
(43) Date de publication de la demande: **16.02.1994**
(21) Numéro de dépôt: 93112305.3
(22) Date de dépôt: 31.07.1993
(51) Int. Cl.: A23L 3/005, A23B 7/01, A21B 2/00, A23L 1/01

(54) **Traitement thermique thermique d'un produit alimentaire**

(30) Priorité: 13.08.1992 CH 2533/92
(71) Demandeur: SOCIETE DES PRODUITS NESTLE S.A., CH-1800 Vevey (CH)
(72) Inventeur: Chaperon, Pierre, CH-1814 La Tour-de-Peilz (CH); Leneuf, Dominique, CH-1814 La Tour-de-Peilz (CH); Pernin, Jacques, CH-1802 Corseaux (CH)
(74) Mandataire: Wavre, Claude-Alain

(57) **Abrégé**

Procédé et appareil de traitement thermique d'un produit alimentaire, dans lesquels on soumet le produit à un rayonnement infrarouge au moyen d'éléments infrarouges (5,6) sous atmosphère de vapeur d'eau.

## Description

La présente invention a pour objet un procédé de traitement thermique d'un produit alimentaire, un appareil pour la mise en oeuvre de ce procédé, ainsi que des applications de ce procédé.

US 3,494,724 décrit un procédé de destruction ou d'inactivation de microorganismes ou d'enzymes dans des matières solides ou liquides, dans lequel cette matière contenue dans une zone confinée perméable aux microondes et aux infrarouges est soumise simultanément à un rayonnement des deux types à travers une atmosphère de vapeur sous pression, cette dernière étant destinée à empêcher la rupture des parois de la zone confinée, notamment d'un conditionnement en film thermoplastique.

US 3,537,862 décrit un procédé de préparation de pâtes alimentaires à cuisson rapide dans lequel on précuit à la vapeur des pâtes à paroi mince tout en les maintenant humides en pulvérisant de l'eau dessus par intermittence ou en continu.

La présente invention a pour but de proposer un procédé et un appareil qui permettent de traiter thermiquement un produit alimentaire, notamment pour le pasteuriser, le stériliser, le blanchir ou le cuire, de manière directe, à savoir sans que le produit soit contenu dans une zone confinée telle qu'un emballage, de manière efficace, à savoir intense et rapide, et avec ménagement, à savoir sans influencer négativement la texture, la couleur, la teneur en eau ou les qualités organoleptiques du produit.

A cet effet, dans le procédé de traitement thermique d'un produit alimentaire selon la présente invention, on soumet le produit à un rayonnement infrarouge sous atmosphère de vapeur d'eau.

De même, l'appareil pour la mise en oeuvre du procédé selon la présente invention comprend un tunnel de traitement thermique, une bande transporteuse ajourée traversant le tunnel, des éléments infrarouges au-dessus et au-dessous de la bande dans le tunnel, et des buses d'injection de vapeur d'eau au-dessus et/ou au-dessous de la bande dans le tunnel.

Ce procédé et cet appareil permettent en effet de traiter thermiquement, notamment de pasteuriser, stériliser, blanchir ou cuire, de manière directe, efficace et avec ménagement, des produits alimentaires destinés notamment à être ensuite conditionnés en emballages stériles, tels que des produits finis ou semi-finis de pâtisserie et de boulangerie, des pâtes alimentaires fraîches, des fruits, des légumes ou des champignons, par exemple.

Dans le présent exposé, l'expression "sous atmosphère de vapeur d' eau à une température de 170°C, par exemple, à pression atmosphérique" est à comprendre comme sous l'atmosphère qui règne dans un tunnel ouvert aux deux extrémités, par exemple, dans lequel on injecte de la vapeur d'eau saturée à pression atmosphérique, vapeur qui est ensuite portée à la température de 170°C sous l'effet du rayonnement infrarouge.

Pour mettre en oeuvre le présent procédé, on peut soumettre le produit à un rayonnement infrarouge de 0,05-2 kWh, de préférence de 0,1-1 kWh, par kg de produit en 5-300 s, sous atmosphère de vapeur d'eau à 100-200°C à pression atmosphérique, par exemple. On procède de préférence en continu, en faisant défiler le produit au travers d'un tunnel dans lequel on entretient simultanément un rayonnement infrarouge et une atmosphère de vapeur d'eau.

Dans une forme de réalisation particulière du présent procédé, on pulvérise en outre simultanément de l'eau stérile sur le produit. Ce dernier peut donc être soumis simultanément à une aspersion de gouttelettes d'eau, au contact de la vapeur et au rayonnement infrarouge. L'eau ainsi pulvérisée peut être froide, tempérée ou chaude selon que l'on désire exercer plutôt un effet de refroidissement ou un effet d'humidification de la surface du produit, par exemple.

Le présent procédé se prête particulièrement bien à la pasteurisation de produits de pâtisserie tels que des cakes en tranches ou des fonds pâtissiers qui seront utilisés ultérieurement pour la confection de desserts réfrigérés, ou de produits de boulangerie tels que des pains à longue conservation, notamment des pains de mie, par exemple.

Le présent procédé permet de pasteuriser de tels produits sans que leur aspect soit modifié, à savoir sans qu'ils brunissent, et sans que leur texture soit affectée, notamment sans qu'ils se dessèchent.

Le présent procédé se prête également très bien au blanchiment de pâtes alimentaires, notamment de pâtes alimentaires farcies telles que des ravioli ou des tortellini fraîchement préparés, par exemple.

Le présent procédé permet de blanchir de tels produits en évitant toute reprise d'humidité sans que leur surface se craquelle ni que leur couleur se modifie, ce qui permet de diminuer le temps d'un séchage ultérieur éventuel, par exemple.

Le présent appareil comprend donc un tunnel de traitement thermique et une bande transporteuse ajourée traversant le tunnel de part en part. Cette bande peut être réalisée sous forme d'éléments de grille métalliques juxtaposés et articulés, ou d'un tapis de mailles de fil d'acier, par exemple.

Cette bande décrit de préférence une trajectoire supérieure plane qui se prolonge en deçà et au-delà du tunnel pour le chargement et le déchargement du produit à traiter qui se présente de préférence sous forme d'objets distincts. La bande peut décrire une trajectoire inférieure qui passe par un moyen d'entraînement fixé sur un châssis, par exemple.

Dans le tunnel, on peut prévoir une rangée d'éléments infrarouges au-dessus et une rangée d'éléments infrarouges au-dessous de la bande, par exemple. Ces éléments peuvent être des tubes en quartz renfermant des spirales en tungstène et disposés chacun dans une gorge parabolique d'un réflecteur métallique par exemple.

Dans une forme de réalisation particulière du présent appareil, des éléments infrarouges sont également prévus au-dessus et/ou au-dessous de la bande transporteuse, juste après la sortie du tunnel, afin de pouvoir réaliser une phase complémentaire du traitement, notamment un séchage, à l'aide du seul rayonnement infrarouge.

Dans le tunnel, on peut prévoir des buses d'injection de vapeur d'eau sous forme de tuyaux horizontaux transversaux percés chacun d'une rangée de trous que l'on peut orienter vers l'entrée, vers la sortie, vers le haut ou vers le bas du tunnel selon la position des tuyaux, par exemple.

De même, on peut prévoir une ou plusieurs buses de pulvérisation d'eau stérile au-dessus et/ou au-dessous de la bande, dans le tunnel.

Dans une forme de réalisation préférée du présent appareil, des éléments de séparation perméables au rayonnement infrarouge mais imperméables à l'eau et à la vapeur d'eau, par exemple des plaques pyrocéramiques, sont prévues entre les éléments infrarouges et la bande, dans le tunnel, et délimitent ainsi horizontalement une chambre de traitement thermique.

Dans une variante de cette forme de réalisation préférée, des gouttières peuvent être prévues sous ladite chambre de traitement thermique, dans le prolongement de parois délimitant verticalement cette chambre, pour permettre l'évacuation de condensats qui peuvent ruisseler le long de la surface intérieure desdites parois.

Dans cette variante, ledit élément de séparation prévu sous la bande peut présenter un pourtour en léger retrait par rapport au bord inférieur des parois pour évacuer des condensats qui peuvent s'égoutter à l'intérieur de la chambre de traitement thermique.

L'appareil selon la présente invention est décrit ci-après en référence au dessin annexé présenté à titre d'exemple, dans lequel:
- la figure 1 représente une vue schématique en perspective oblique en semi-transparence d'une forme de réalisation préférée du présent appareil,
- la figure 2 représente une vue schématique en perspective oblique d'une forme de réalisation particulière du présent appareil, et
- la figure 3 représente une vue schématique en perspective oblique d'une variante de ladite forme de réalisation préférée du présent appareil. ..

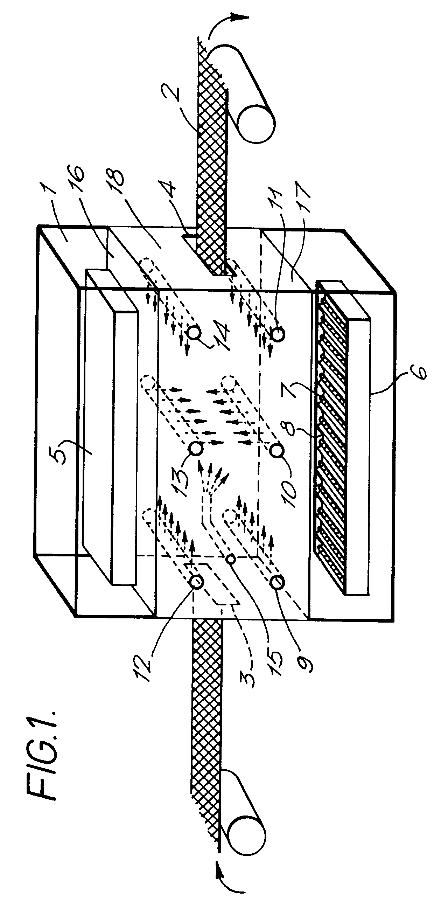

Comme on le voit à la figure 1, le présent appareil comprend un tunnel 1 de traitement thermique et une bande transporteuse ajourée 2 qui traverse le tunnel de part en part, y entrant par une porte d'entrée 3 et en ressortant par une porte de sortie 4.

La bande transporteuse 2 est réalisée sous forme d'un tapis de mailles de fil d'acier. Elle décrit une trajectoire supérieure plane qui se prolonge en deçà de la porte d'entrée du tunnel 3 pour le chargement du produit à traiter et au-delà de la porte de sortie 4 du tunnel pour le déchargement du produit traité. La partie de la trajectoire supérieure plane située dans le tunnel, non représentée pour des raisons de clarté du dessin, se situe au même niveau et dans l'axe de ces prolongements. La bande décrit une trajectoire inférieure, non représentée, qui passe par un moyen d'entraînement fixé sur un châssis.

Dans le tunnel 1, une rangée d'éléments infrarouge 5 transversaux est prévue au-dessus de la bande et une rangée d'éléments infrarouges 6 transversaux est prévue au-dessous de la bande. Chaque élément infrarouge est un tube en quartz 7 renfermant une spirale en tungstène et disposé dans une gorge parabolique d'un réflecteur métallique 8. Ces éléments émettent un rayonnement infrarouge de longueur d'onde comprise entre 0,7 et 25 u.

Dans le tunnel 1, des buses d'injection de vapeur d'eau 9-14 sont prévues au-dessus et au-dessous de la bande transporteuse 2, sous forme de tuyaux horizontaux transversaux percés chacun d'une rangée de trous. Ces trous sont orientés horizontalement vers l'amont pour deux tubes 11 et 14 prévus près de la porte de sortie 4, horizontalement vers l'aval pour deux tubes 9 et 12 prévus près de la porte d'entrée 3, verticalement vers le haut pour un tube 10 prévu au-dessous de la bande au milieu du tunnel, et verticalement vers le bas pour un tube 13 prévu au-dessus de la bande au milieu du tunnel.

Une buse de pulvérisation d'eau 15 est prévue dans le tunnel 1 à proximité de la porte d'entrée 3 au-dessus de la bande transporteuse 2. Cette buse est orientée de manière à pouvoir projeter un rideau de gouttelettes d'eau horizontal vers l'aval.

Enfin, des éléments de séparation perméables au rayonnement infrarouge mais imperméables à l'eau et à la vapeur sont prévus sous forme de plaques pyrocéramiques 16 et 17 entre les éléments infrarouges 5 et 6 et la bande 2, dans le tunnel, et délimitent ainsi horizontalement une chambre de traitement thermique 18.

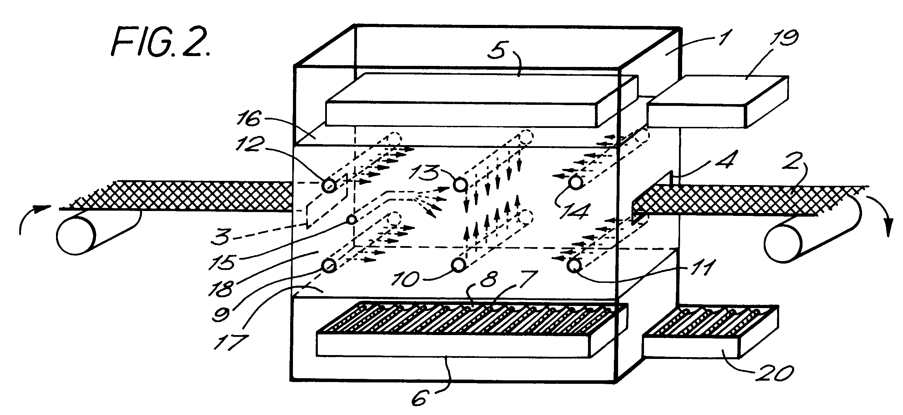

Dans la forme de réalisation particulière représentée à la figure 2, l'appareil comprend en outre des éléments infrarouges au-dessus (19) et au-dessous (20) de la bande 2 juste après la porte de sortie 4 du tunnel 1.

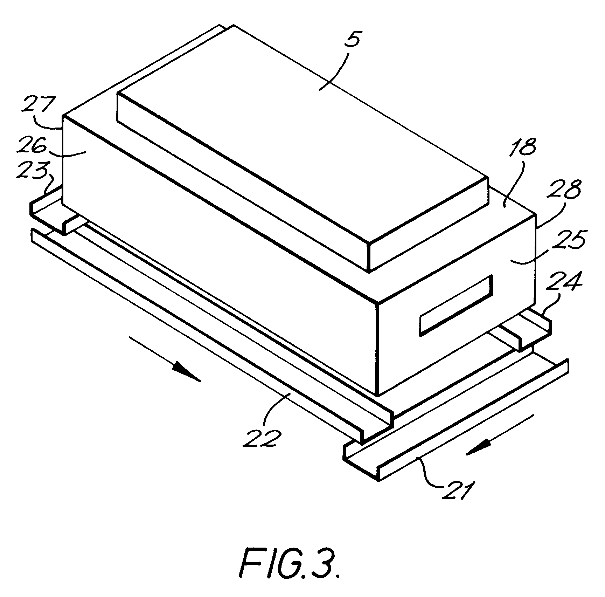

Dans la variante de la forme de réalisation préférée représentée à la figure 3, le présent appareil comprend en outre des gouttières 21-24 sous la chambre de traitement thermique 18, dans l'alignement vertical de parois 25-28 délimitant verticalement cette chambre.

Les extrémités d'une gouttière transversale amont 23 débouchent au-dessus des extrémités amont de gouttières longitudinales 22 et 24, et les extrémités aval des gouttières longitudinales débouchent au-dessus des extrémités d'une gouttière transversale aval 21. Les gouttières longitudinales sont légèrement inclinées vers l'aval et les gouttières transversales sont légèrement inclinées d'un même côté pour faciliter l'évacuation de condensats qui peuvent ruisseler le long de la surface intérieure des parois 25-28.

De même, ledit élément de séparation situé sous la bande, non représentée, présente une légère inclinaison par rapport au plan horizontal, à la fois vers l'aval et du même côté que les gouttières latérales 21 et 23, tout en présentant un pourtour, non représenté, en léger retrait par rapport au bord inférieur des parois 25-28, pour évacuer les condensats qui peuvent s'égoutter à l'intérieur de la chambre de traitement thermique 18.

Les exemples ci-après sont présentés à titre d'illustration du procédé selon la présente invention. Les pourcentages et parties y sont donnés en poids sauf indication contraire.

### Exemples 1 et 2

A l'aide d'un appareil semblable à celui décrit en référence à la figure 3 du dessin, on blanchit des ravioli de pâte de blé dur farcis de viande hâchée et présentant une teneur en eau de 33%.

La bande transporteuse présente une largeur de 0,3 m. Au-dessus et au-dessous de la bande, les rangées d'éléments infrarouges présentent une longueur de 0,7 m.

Les ravioli sont disposés régulièrement sur la bande de manière qu'ils ne se chevauchent pas, ce qui représente environ 1 kg de ravioli par m de bande. La vitesse de la bande transporteuse est ajustée de manière que les raviolis soient soumis au rayonnement infrarouge durant soit 52 s, soit 76 s. La puissance de rayonnement est ajustée à différentes valeurs. On entretient en outre dans le tunnel une atmosphère de vapeur d'eau à environ 120°C à pression atmosphérique.

Après le traitement, on détermine la température atteinte au centre de la farce, la teneur en eau des ravioli et les pertes de poids subies au cours du traitement. On obtient les résultats présentés dans le tableau I ci-après.

**Tableau I**

| Exemple No | Durée S | Puissance de rayonnement IR kWh/kg | Température de la farce °C | Pertes de poids % | Teneur en eau % |
|---|---|---|---|---|---|
| 1 | 52 | 0,13 | 77-80 | 0,4-0,5 | 32,5-33,0 |
| 2 | 76 | 0,14 | 87-90 | 0,8-0,9 | 31,9-32,2 |

Les ravioli ainsi blanchis ne présentent aucune modification de leur état de surface ni aucune altération de leurs propriétés organoleptiques tout en n'ayant absorbé pratiquement aucune eau au cours du traitement.

On peut sécher ensuite ces ravioli dans un tunnel à air chaud à humidité contrôlée, de manière à abaisser leur teneur en eau au-dessous de 30% avant de les conditionner en emballage stérile.

### Exemples 3-5

A l'aide d'un appareil semblable à celui décrit en référence à la figure 3 du dessin, dont la bande transporteuse présente une largeur de 0,3 m et dont les rangées d'éléments infrarouges présentent une longueur de 0,7 m, on pasteurise des tranches de génoise de environ 9 mm d'épaisseur et environ 60 mm de diamètre pesant environ 6,2-6,4 g. Ces tranches sont destinées à être conditionnées en emballage stérile avant d'être utilisées pour la confection de desserts. Elles présentent avant traitement une teneur en eau de 7,3-8,2% et une activité de l'eau de 0,49-0,52. Leur couleur beige-brune est caractérisée par une composante L du système de coordonnées L, a, b de environ 57 pour la surface supérieure et environ 50 pour la surface inférieure.

On dispose ces tranches régulièrement sur la bande en veillant à ce qu'elles ne se chevauchent pas.

On réalise trois traitements différents, à des débits respectifs de 6, 12 et 32 kg de produit par h, tout en pulvérisant environ 4 l d'eau stérile, à température ambiante, par h dans le tunnel, et sous une atmosphère de vapeur à 170°C à pression atmosphérique.

Durant le premier traitement, Exemple 3, le produit est soumis d'abord à un rayonnement infrarouge de 0,16 kWh/kg en 30 s, puis à un rayonnement de 0,12 kWh/kg en 90 s.

Durant le deuxième traitement, Exemple 4, le produit est soumis d'abord à un rayonnement de 0,22 kWh/kg en 15 s, puis à un rayonnement de 0,06 kWh/kg en 45 s.

Durant le troisième traitement, Exemple 5, le produit est soumis à un rayonnement de 0,28 kWh/kg en 23 s.

On détermine pour chaque traitement la température à la surface des tranches à la sortie du tunnel, leur teneur en eau, leur Aw, leur poids, et la composante L de la couleur de leur face supérieure et de leur face inférieure. Les résultats obtenus sont regroupés dans le tableau II ci-après.

**Tableau II**

| | Echantillon comparatif non traité | Exemple 3 | Exemple 4 | Exemple 5 |
|---|---|---|---|---|
| Conditions de traitement | --- | 0,16kWh/kg, 30s | 0,22kWh/kg, 15s | 0,28kWh/kg, 23s |
| | | 0,12kWh/kg, 90s | 0,06kWh/kg, 45s | |
| Température de surface à la sortie du tunnel | --- | 108-112°C | 108-112°C | 137-140°C |
| Teneur en eau % | 7,3-8,2 | 5,2-6,9 | 7,7-8,6 | 6,0-7,0 |
| Aw | 0,49-0,52 | 0,37-0,44 | 0,47-0,51 | 0,40-0,50 |
| Poids/pièce (g) | 6,27-6,43 | 6,13-6,17 | 5,4-6,4 | 6,21-6,28 |
| L face supérieure | 57,0-59,3 | 52,0-55,6 | 55,3-58,9 | 52,4-58,2 |
| L face inférieure | 49,8-51,5 | 40,7-45,3 | 42,7-48,5 | 42,3-48,9 |

Des mesures en cours de traitement montrent également qu'une température de 100°C au centre des tranches est atteinte très rapidement, à savoir en 34 s, 20 s et 17 s pour les exemples respectifs 3, 4 et 5.

Les résultats de contrôles microbiologiques sévères montrent qu'avec chacun des traitements des exemples 3-5 on obtient une pasteurisation particulièrement efficace.

Comme ceci est bien illustré sur le tableau II, cette pasteurisation efficace et rapide est obtenue sans influencer notablement les caractéristiques physiques et organoleptiques ni l'aspect du produit.

### Exemples 6 et 7 et exemple comparatif

Avec l'appareil décrit en référence au dessin annexé et utilisé également aux exemples précédents, on réalise deux traitements de tranches de génoise dans des conditions semblables à celles décrites à l'exemple 5, à l'exception du fait que l'on pulvérise 5 l au lieu de 4 l d'eau stérile par h à l'exemple 6, que l'on ne pulvérise pas d'eau à l'exemple 7 ni à l'exemple comparatif , et que l'on travaille en atmosphère ambiante, sans vapeur, à l'exemple comparatif.

On détermine la température de surface des tranches à la sortie du tunnel, les pertes de poids subies, la teneur en eau, l'Aw et l'on apprécie visuellement la couleur. On obtient les résultats présentés dans le tableau III ci-après.

**Tableau III**

| | Echantillon comparatif non traité | Exemple 6 | Exemple 7 | Exemple comparatif |
|---|---|---|---|---|
| Conditions de traitement | 0,28kWh/kg, 23s --- | 0,28kWh/kg, 23s 51 eau/h vapeur à 170°C | 0,28kWh/kg, 23s vapeur à 170°C | |
| Température de surface à la sortie du tunnel (°C) | --- | 128-131 | 135-141 | 123-127 |
| Gain ou pertes ---de poids (%) | gain moyen 0,3 | pertes moyennes | pertes moyennes 1,4 | 2,7 |
| Teneur en eau (%) | 6,8-7,4 | 7,4-8,0 | 6,7-7,4 | 4,7-5,5 |
| Aw | 0,49 | 0,50 | 0,48 | 0,39 |
| Couleur | brun-beige | inchangée | inchangée | plus brune |

On fait les mêmes constatations pour les produits des exemples 6 et 7 que pour ceux des exemples 3-5 ci-dessus. Par contre, on voit dans ce tableau que les tranches de l'exemple comparatif sont nettement plus sèches et plus brunes qu'elles ne l'étaient avant traitement.

## Revendications

1. Procédé de traitement thermique d'un produit alimentaire, dans lequel on soumet le produit à un rayonnement infrarouge sous atmosphère de vapeur d'eau.

2. Procédé selon la revendication 1, dans lequel on pulvérise en outre simultanément de l'eau stérile sur le produit.

3. Procédé selon la revendication 1, dans lequel on soumet ledit produit à un rayonnement infrarouge de 0,05-2 kWh, de préférence 0,1-1 kWh par kg de produit en 5-300 s, sous atmosphère de vapeur d'eau à 100-200°C à pression atmosphérique.

4. Application du procédé selon la revendication 1, pour pasteuriser, stériliser, blanchir ou cuire des produits alimentaires destinés à être ensuite conditionnés en emballages stériles, notamment des produits de pâtisserie et de boulangerie, des pâtes alimentaires fraîches, des fruits, des légumes ou des champignons.

5. Appareil pour la mise en oeuvre du procédé selon la revendication 1, comprenant un tunnel de traitement thermique , une bande transporteuse ajourée traversant le tunnel, des éléments infrarouges au-dessus et au-dessous de la bande dans le tunnel, et des buses d'injection de vapeur d'eau au-dessus et/ou au-dessous de la bande dans le tunnel.

6. Appareil selon la revendication 5, comprenant en outre une ou plusieurs buses de pulvérisation d'eau au-dessus et/ou au-dessous de la bande dans le tunnel.

7. Appareil selon la revendication 5, comprenant en outre des éléments infrarouges au-dessus et/ou au-dessous de la bande juste après la sortie du tunnel.

8. Appareil selon la revendication 5, comprenant en outre des éléments de séparation perméables au rayonnement infrarouge mais imperméables à l'eau et à la vapeur d'eau entre les éléments infrarouges et la bande, dans le tunnel, qui délimitent ainsi horizontalement une chambre de traitement thermique.

9. Appareil selon la revendication 8, comprenant en outre des gouttières sous ladite chambre de traitement thermique, dans l'alignement vertical de parois délimitant verticalement cette chambre, ledit élément de séparation prévu sous la bande présentant un pourtour en léger retrait par rapport au bord inférieur des parois.
